# EUROPEAN PATENT SPECIFICATION

(11) **EP 1 464 458 B1**
(45) Date of publication and mention of the grant of the patent: **15.07.2009**
(21) Application number: 01274993.3
(22) Date of filing: 18.12.2001
(51) Int. Cl.: B26D 7/20

(54) **RIGID, FLOATING CUTTING DEVICE**
STARRE, SCHWIMMEND GELAGERTE SCHNEIDVORRICHTUNG
DISPOSITIF DE COUPE FLOTTANT RIGIDE

(43) Date of publication of application: 06.10.2004
(73) Proprietor: GRUPO ANTOLIN-INGENIERIA, S.A., 09007 Burgos (ES)
(72) Inventor: DE LA PENA ALONSO, Rubén, 28214 FRESNEDILLAS (Madrid) (ES)
(74) Representative: Carpintero Lopez, Francisco
(86) International application number: PCT/ES2001/000491
(87) International publication number: WO 2003/051590

(56) References cited:
- FR-A- 840 211
- GB-A- 989 674
- GB-A- 1 104 390
- US-A- 2 191 655
- US-A- 3 269 234

## Description

### OBJECT OF THE INVENTION

The present invention relates to a cutting apparatus which will be termed rigid floating, for application in any pressure cutting process in which the linear cutting pressure is less than 10⁷ N/m and the tolerance in the cutting direction is greater than 0.2 mm, which signifies that with this apparatus it is possible to cut, among other things, sandwich-type panels of different compositions.

In more specific terms, these can contain layers of fabric, polyurethane foams, fibreglass, paper, etc., with different thickness.

A typical example of a sandwich employed in the manufacturing technologies of roof linings is that constituted by the following layers: paper, fibreglass, adhesive, polyurethane foam, adhesive, fibreglass, plastic film and fabric.

It is also possible to use this apparatus to cut other types of materials like plastics or metals with low hardness.

The cutting apparatus is specially suitable for use in the automobile industry, specifically in the production of motor vehicle roof linings, wherein simultaneously with the moulding of the roof the trimming of the surplus material thereof takes place, in the same machine and in the same operation.

The object of the invention is to be able to absorb the possible misalignments, wear, or imperfections of moulds and working machines, that is to absorb possible deviations in position of moulds, blades and presses within certain limits. This is because in any machine of the aforementioned type there is no "zero" tolerance, and however to achieve an adequate cut a perfect alignment of the elements which intervene is required, for which reason it is necessary that at least one of them be capable of adjustment until managing to fit completely on the other.

### BACKGROUND OF THE INVENTION

In the field of practical application of the invention and up to the present time, three forms of cutting are known with a movement predominantly normal to the surface of the piece to be cut:: pressure cutting, cutting by shearing and impact cutting.

Pressure cutting is **characterised in that** the piece is held between blade and striking plate until the pressure applied by both reaches the value sufficient to cut the piece. In said cutting action blade and striking plate are gradually brought together until in the final instant in which the cutting becomes effective, direct contact takes place between the two.

In cutting by shearing, blade and striking plate have a relative movement such that the material is compelled to separate without there being substantial compressive forces present, and without the blade coming to rest directly on the striking plate at any time, in a manner similar to how a pair of scissors would work. It is also applied in cutting machines and moulds.

Impact cutting could be considered a variant of pressure cutting insofar as the configuration of mould and cutting elements is concerned. However in this case the speed with which the mobile part of the mould moves during the cutting operation is much greater so that the cutting force is applied only by the blade, whereby the striking plate simply serves to support the piece in the cutting area.

The cutting apparatus of the invention is applicable to pressure cutting systems, which in many cases of cutting and conforming linings is preferred over the other two systems because of its greater simplicity in implementation and reliability. However pressure cutting, to be effective, requires a very precise alignment between striking plate and blade, which limits its use and needs frequent and specialized operations of maintenance and alignment.

As an example can be cited US 3 269 234 in which an automatic cutting machine and method for compensation of misalignment are disclosed.

Another example of the state of the art is GB 1 104 390.

### DESCRIPTION OF THE INVENTION.

The cutting apparatus of the invention comprises the features of claim 1 and is applicable to pressure cutting systems.

The cutting apparatus which the invention discloses centres its characteristics on the fact that the striking plate admits certain relative movements of alignment apart from the actual cutting movement. This implies a matching of the moving part to the fixed part, as well as self-alignment with time during the useful life of the cutting tool, and when the tool is exchanged between different machines.

In more specific terms it has been foreseen that the striking plate is floating, as a consequence of being mounted or resting on an elastic support.

Specifically forming part in the apparatus, as well as the steel blade, there is a striking plate also of steel, of sufficient thickness so as to retain its shape in the face of the action of the blade and the profile of which corresponds with that of the edge of said blade, but with the special particularity that the striking plate, in this case, is rigid and retains its shape and is mounted, simply resting or with the inclusion of an insulating layer, on an elastic support, preferably an elastomer, which permits through its own deformation that the striking plate adapts its position in order to match the profile of the cutting blade, correcting the defects or misalignments that may exist between the components of the mould and in the machine itself.

The striking plate must have a thickness of more than 4 mm, to avoid deformations in the same, that is to obtain the sufficient degree of rigidity therein, while the support must have sufficient elasticity to absorb the cutting pressure and distribute it evenly along the whole length of the striking plate, at the same time that its hardness has to be adequate to allow sufficient force to be transmitted to make the cut with deformations in the elastomer of less than 2 mm.

In more specific terms, the striking plate will be made of alloy steel for wear-resistant tools of the group F-500 (according to Spanish IHA standards), with surface hardness of between 40 and 60 HRc, or another material with similar mechanical properties.

The striking plate runs the whole cutting line and is formed by consecutive segments of at least 200 mm each, and whose width will lie between 4 and 100 mm.

The elastic support or elastomer will be of a thickness between 2 and 8 millimetres and have a Shore A hardness of between 75 and 95.

Between striking plate and elastic support it will be possible to include heat lagging with a thickness of between 0.5 and 2.5 mm, resistant to temperatures up to at least 250° C.

The join between the striking plate and the elastomer or elastic support is free, simply support, the movement of these being guided by the channel in which they are housed and restricted in the direction parallel to that of cutting by a fastening which maintains both elements within said channel.

The fastening to impede the striking plate from leaving the channel and allow the movement thereof at the same time, will be possible to implement in different ways, always through at least one of the sides of the striking plate.

An optional embodiment consists in mounting the blade in a similar form, leaving the striking plate fixed. In this case it is the blade that adapts its position to that of the striking plate as the cut takes place.

### DESCRIPTION OF THE DRAWINGS

To complete the description that is being made and with the object of assisting in a better understanding of the characteristics of the invention, in accordance with a preferred example of practical embodiment of the same, accompanying this description as an integral part thereof, is a set of drawings wherein by way of illustration and not restrictively, the following has been shown:
Figure 1. - It shows a schematic representation in side elevation of a rigid and floating cutting apparatus embodied in accordance with the object of the present invention, in which the blade appears separated from the striking plate.
Figure 2. - It shows a similar representation to that of the previous figure, in the working position, that is with the blade pressed against the striking plate with the elastic support deformed in the end position of the cutting travel.
Figure 3. - It shows a detail in cross section of an example of practical embodiment for the fastening of the striking plate to the mould.
Figure 4. - It shows, according to a representation similar to that of the previous figure, a variant of embodiment for said fastening.
Figure 5. - It shows schematically the relative movements of the blade and of the striking plate for a perfect alignment between the two.

### PREFERRED EMBODIMENT OF THE INVENTION

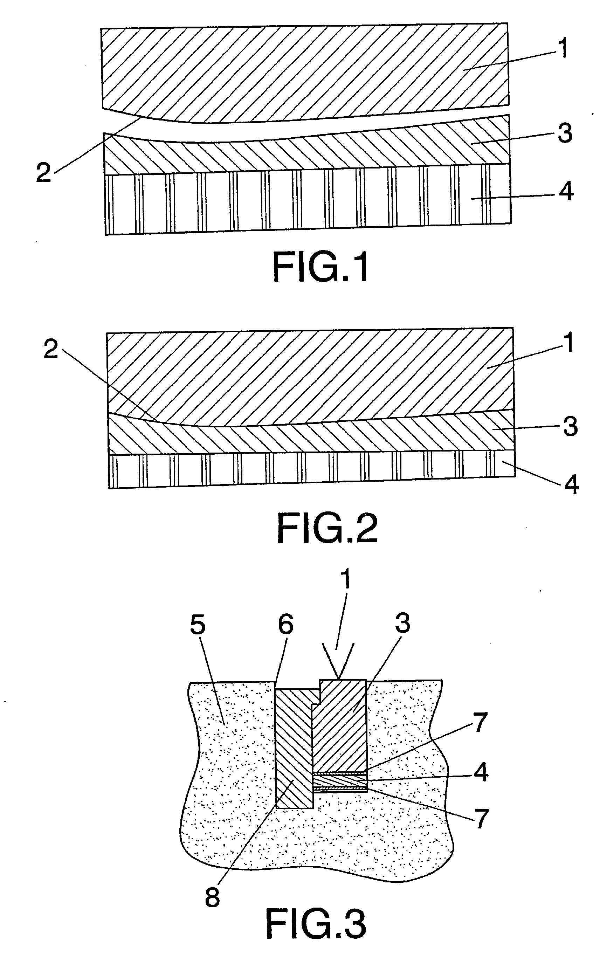

In the light of the figures described, especially of figures 1 and 2, it can be observed how in the cutting apparatus which the invention discloses, there participate a blade preferably of steel (1), with a cutting profile (2) which can adopt any configuration in accordance with that foreseen for the piece to be obtained, said blade (1) intended to fall on a striking plate (3), also preferably of steel, for which a blade-receiving profile is defined which complements that of the blade in question, as is perfectly observed in figure 1, so that when the blade (1) advances toward the striking plate (3) it makes contact with the latter, applying force progressively until reaching the limit situation shown in figure 2, that is, until the cutting profile of the blade is perfectly coupled on the equivalent profile of the striking plate, and so that is this way the piece is totally cut.

To obtain this effect the striking plate (3) rests on an elastic support (4), preferably an elastomer which deforms as the blade (1) is pressed against the striking plate (3).

As previously stated, the striking plate (3) needs to have sufficient thickness to prevent it from suffering any type of deformation on receiving the action of the blade (1), specifically a thickness greater than 4 mm, while the elastomer (4) has to have a spring constant sufficient to absorb the cutting pressure and to distribute it evenly over the whole striking plate with a deformation less than 2 mm.

The most suitable values for the aforesaid parameters have been stated previously.

In the detail in cross-section of figure 3 a first example of practical embodiment has been represented for the fastening of the striking plate (3) to the mould (5), specifically inside a channel (6) of the latter, in which example said channel (6) is of considerably more width than the striking plate (3), so that after the emplacement inside said channel (6) of the elastomer (4) and in the event of the insulating material (7), the securing is carried out with the collaboration of a wedge (8) press-fitted in the space of the channel (6) left free by the striking plate (3).

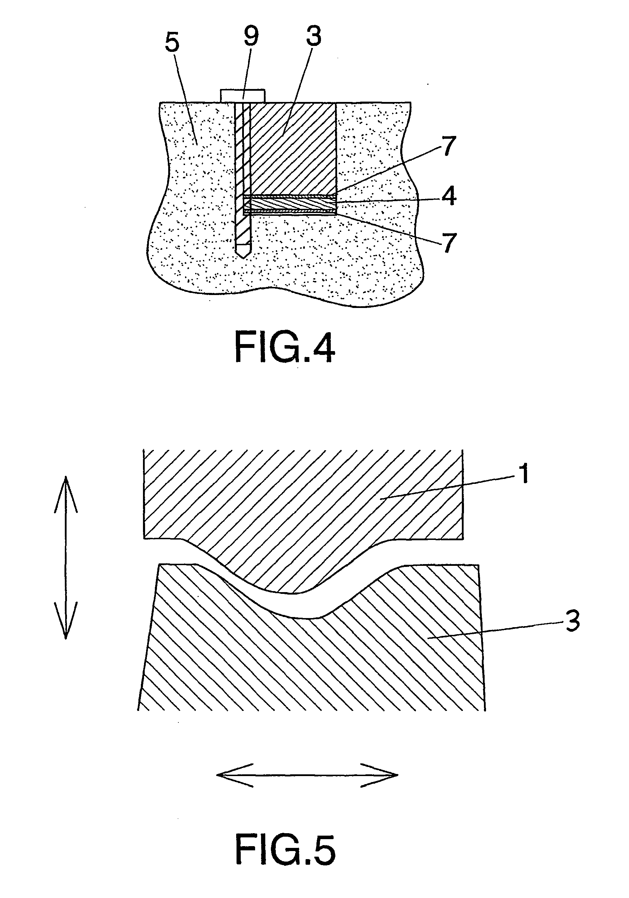

Nevertheless and as shown in figure 4, the striking plate (3) can be of the same width as the channel (6), so that said striking plate (3) with the elastomer (4) and the lagging (7) is secured to the mould by means of a fastening screw (9) located laterally with respect to the striking plate (3), the same as occurred with the press-fitted wedge (8) of the example of the previous figure.

From the structure described a number of advantages arise which can be synthesized in the following aspects:
- The apparatus allows the same tool to be used in different machines without the need for prior adjustments.
- Additional manual work is not necessary to achieve good alignment, of the cutting tools when these are replaced, repaired or employed in different machines.
- The pieces obtained can be mounted directly as they leave the moulding-cutting machine avoiding subsequent reworking operations.
- Excessive or abnormal wear is substantially reduced in both the blade (1) and the striking plate (3), by achieving that in all the cycles the cutting force is distributed evenly along the whole cutting line and thereby preventing the force being concentrated in particular areas of the edge of the blade or of the striking plate. It is possible to make replacements without having to make alignments.
- Its maintenance is simple, not requiring very specialized operatives.
- Cutting faults can be resolved on the working machine itself.
- The cutting quality is notably enhanced, assuring that said cut is produced under a wider range of circumstances.
- It allows working with different values of cutting force which allows either working with different materials using the same tool or doing partial or marked cuts if so desired.

## Claims

1. Rigid floating cutting apparatus, which being of special application both in machines which perform only the cutting and in those which carry out simultaneously the pressing, conforming and trimming of a sandwich type piece or similar, like for example in the production of roof linings for vehicles, and having the objective of absorbing possible positional deviations both in the cutting elements and in the moulds of the working machines themselves, comprising a blade (1) and a striking plate (3)
wherein the striking plate (3) is mobile, materialized in a rigid piece, preferably of steel, which rests on a support (4), elastic, preferably an elastomer, with sufficient elasticity to reach the cutting pressure,
**characterised in that** the blade (1) and the striking plate (3) have complementary, at least partially curved profiles (2), so that in the advance of the blade toward the striking plate (3) these elements come into contact until there is total coupling of the blade profile with that of the striking plate (3), through deformation of the elastic support (4) on which said striking plate (3) rests.

2. Rigid floating cutting apparatus, according to previous claims, **characterised in that** the blade (1), the striking plate (3) and the elastic support (4) establish the following parameters:
- the striking plate (1) is made from wear-resistant alloy steel, of the F-500 group according to IHA standards, with surface hardness of between 40 and 60 HRc;
- the thickness of the striking plate is more than 4 mm, its length covers the whole cutting line and it is formed in consecutive segments of at least 200 mm each and its width is between 4 and 100 mm.
- the elastic support (4) has a thickness of between 2 and 8 mm, and it has a Shore A hardness of between 75 and 95.

3. Rigid floating cutting apparatus, according to previous claims, **characterised in that** the mobile element, be it the striking plate or the blade, and the elastic support (4) are connected to each other without the need for additional means of joining the two.

4. Rigid floating cutting apparatus, according to previous claims, **characterised in that** it is capable of also including an insulating layer with a thickness of between 0.5 and 2.5 mm and a resistance to temperatures of up to at least 200° C.

5. Rigid floating cutting apparatus, according to previous claims, **characterised in that** the elastic support (4) and the mobile element mounted thereon, the striking plate (3), is located in a channel of the mould (5), with the collaboration of a fastening system which maintains both elements within this channel by way of retainer, the movement of these being guided by said channel which houses them and restricted in the direction parallel to that of cutting.

6. Rigid floating cutting apparatus, according to previous claims, **characterised in that** the system of fastening the elastic support (4) and of the mobile element, in the channel (6) of the mould (5), is implemented with the collaboration of a tightening wedge (8) or with the collaboration of a screw (9) which in any case act at least on one of the sides of the mobile element.

## Patentansprüche

1. Starre, schwimmende Schneidvorrichtung, die sowohl bei Maschinen Anwendung findet, die lediglich das Schneiden ausführen, als auch bei jenen, die gleichzeitig das Pressen, Anpassen und Zuschneiden eines sandwichartigen Teils oder ähnlichen Objektes, wie etwa bei der Herstellung von Deckenverkleidungen von Fahrzeugen, ausführen, und die Aufgabe hat, mögliche Positionsabweichungen sowohl bei den Schneidelementen als auch bei den Formen der Bearbeitungsmaschinen an sich zu absorbieren, enthaltend eine Klinge (1) und eine Anschlagplatte (3),
wobei die Anschlagplatte (3) beweglich und als starres Stück vorzugsweise aus Stahl ausgeführt ist, das auf einem elastischen Träger (4), vorzugsweise einem Elastomer, mit einer ausreichenden Elastizität ruht, um den Schneiddruck zu erreichen,
**dadurch gekennzeichnet, dass** die Klinge (1) und die Anschlagplatte (3) komplementäre, wenigstens teilweise gekrümmte Profile (2) haben, so dass bei der Annäherung der Klinge an die Anschlagplatte (3) diese Elemente einander berühren, bis eine vollständige Kopplung des Profils der Klinge mit dem der Anschlagplatte (3) durch Verformung des elastischen Trägers (4) besteht, auf dem die Anschlagplatte (3) ruht.

2. Starre, schwimmende Schneidvorrichtung gemäß dem vorherigen Anspruch, **dadurch gekennzeichnet, dass** die Klinge (1), die Anschlagplatte (3) und der elastische Träger (4) folgende Parameter erfüllen:
- die Anschlagplatte (1) besteht aus einer abnutzungsfesten Stahllegierung der Gruppe F-500 gemäß IHA-Standards mit einer Oberflächenhärte zwischen 40 und 60 HRc;
die Dicke der Anschlagplatte beträgt mehr als 4 mm, ihre Länge deckt die gesamte Schneidlinie ab und sie ist in aufeinanderfolgenden Segmenten von wenigstens jeweils 200 mm ausgebildet, wobei ihre Breite zwischen 4 und 100 mm beträgt;
der elastische Träger (4) hat eine Dicke zwischen 2 und 8 mm und eine Shore-A-Härte zwischen 75 und 95.

3. Starre, schwimmende Schneidvorrichtung gemäß den vorhergehenden Ansprüchen, **dadurch gekennzeichnet, dass** das bewegliche Element, sei es die Anschlagplatte oder die Klinge, und der elastische Träger (4) miteinander verbunden sind, ohne dass eine zusätzliche Einrichtung zum Verbinden der beiden erforderlich ist.

4. Starre, schwimmende Schneidvorrichtung gemäß den vorhergehenden Ansprüche, **dadurch gekennzeichnet, dass** sie in der Lage ist, zudem eine Isolierschicht zu enthalten, die zwischen 0,5 und 2,5 mm dick ist und eine Temperaturbeständigkeit von wenigstens bis zu etwa 200°C hat.

5. Starre, schwimmende Schneidvorrichtung gemäß den vorhergehenden Ansprüchen, **dadurch gekennzeichnet, dass** sich der elastische Träger (4) und das daran angebrachte Element, die Anschlagplatte (3), in einem Kanal der Form (5) befinden, wobei ein Befestigungssystem einwirkt, das beide Elemente mit Hilfe einer Halterung in diesem Kanal hält, wobei deren Bewegung durch den Kanal, der diese aufnimmt, geführt und in Richtung parallel zur jener des Schneidens begrenzt ist.

6. Starre, schwimmende Schneidvorrichtung gemäß den vorhergehenden Ansprüchen, **dadurch gekennzeichnet, dass** System zum Befestigen des elastischen Trägers (4) und des beweglichen Elementes im Kanal (6) der Form (5) unter Zuhilfenahme eines Befestigungskeils (8) oder Zuhilfenahme einer Schraube (9) ausgeführt ist, die in jedem Fall auf wenigstens eine der Seiten des mobilen Elementes einwirken.

## Revendications

1. Appareil de découpe flottant rigide, présentant une application spéciale à la fois dans des machines qui exécutent uniquement la découpe et dans celles qui réalisent simultanément le pressage, le conformage et le détourage d'une pièce de type sandwich ou similaire, tel que par exemple dans la production de garnitures de toit pour véhicules, et présentant l'objectif d'absorber d'éventuels écarts de position à la fois dans les éléments de découpe et dans les moules des machines de travail elles-mêmes, comprenant une lame (1) et une tôle de frappe (3),
dans lequel la tôle de frappe (3) est mobile, matérialisée sous la forme d'une pièce rigide, de préférence en acier, qui repose sur un support (4), élastique, de préférence un élastomère, présentant une élasticité suffisante pour atteindre la pression de découpe,
**caractérisé en ce que** la lame (1) et la tôle de frappe (3) présentent des profils (2) complémentaires et au moins partiellement incurvés, de sorte qu'à l'avancée de la lame vers la tôle de frappe (3), ces éléments entrent en contact jusqu'au couplage total du profil de lame avec celui de la tôle de frappe (3), par une déformation du support élastique (4) sur lequel repose ladite tôle de frappe (3).

2. Appareil de découpe flottant rigide selon la revendication 1, **caractérisé en ce que** la lame (1), la tôle de frappe (3) et le support élastique (4) établissent les paramètres suivants :
- la tôle de frappe (1) est constituée d'un acier allié résistant à l'usure du groupe F-500 selon les normes IHA, avec une dureté de surface comprise entre 40 et 60 HRc ;
- l'épaisseur de la tôle de frappe est supérieure à 4 mm, sa longueur couvre toute la ligne de découpe et elle est formée de segments consécutifs mesurant chacun au moins 200 mm, et sa largeur est comprise entre 4 et 100 mm ;
- le support élastique (4) présente une épaisseur comprise entre 2 et 8 mm, et il présente une dureté Shore A comprise entre 75 et 95.

3. Appareil de découpe flottant rigide selon les revendications précédentes, **caractérisé en ce que** l'élément mobile, qu'il s'agisse de la tôle de frappe ou de la lame, et le support élastique (4) sont reliés l'un à l'autre sans nécessité de moyens supplémentaires pour joindre les deux éléments.

4. Appareil de découpe flottant rigide selon les revendications précédentes, **caractérisé en ce qu'**il est capable également de comprendre une couche isolante d'une épaisseur comprise entre 0,5 et 2,5 mm et une résistance à des températures pouvant atteindre au moins 200 °C.

5. Appareil de découpe flottant rigide selon les revendications précédentes, **caractérisé en ce que** le support élastique (4) et l'élément mobile monté sur celui-ci, la tôle de frappe (3), sont situés dans un canal du moule (5), avec la collaboration d'un système de fixation qui maintient les deux éléments à l'intérieur de ce canal au moyen d'un élément de retenue, le déplacement de ces éléments étant guidé par ledit canal qui les loge et limité dans la direction parallèle de celle de la découpe.

6. Appareil de découpe flottant rigide selon les revendications précédentes, **caractérisé en ce que** le système de fixation du support élastique (4) et de l'élément mobile, dans le canal (6) du moule (5), est mis en oeuvre avec la collaboration d'une cale de serrage (8) ou avec la collaboration d'une vis (9) qui, dans tous les cas, agissent au moins sur un des côtés de l'élément mobile.
